# EUROPEAN PATENT APPLICATION

(11) **EP 4 838 934 A1**
(43) Date of publication of application: **11.11.2026**
(21) Application number: 25747738.0
(22) Date of filing: 23.01.2025
(51) Int. Cl.: H04W 24/02

(54) **DATA TRANSMISSION METHOD, AND DEVICE AND COMPUTER-READABLE STORAGE MEDIUM**

(30) Priority: 29.01.2024 CN 202410129419
(71) Applicant: Honor Device Co., Ltd., Shenzhen, Guangdong 518040 (CN)
(72) Inventor: ZHANG, Mingzhu, Shenzhen, Guangdong 518040 (CN); TANG, Xiaoxuan, Shenzhen, Guangdong 518040 (CN)
(74) Representative: Isarpatent
(86) International application number: PCT/CN2025/074184
(87) International publication number: WO 2025/162168

(57) **Abstract**

Embodiments of this application provide a data transmission method, a device, and a computer-readable storage medium, and relate to the field of wireless communication technologies. The method includes: A network device sends first information to a terminal device, where the first information includes configuration information of a timer. The terminal device determines a state of the timer, and receives or transmits first data in a case that the timer is in a running state, where a start moment of the timer is within measurement time. In the foregoing solution, by using the timer, the terminal device may receive or transmit data within the measurement time.

## Description

This application claims priority to Chinese Patent Application No. 202410129419.0, filed with the China National Intellectual Property Administration on January 29, 2024 and entitled "DATA TRANSMISSION METHOD, DEVICE, AND COMPUTER-READABLE STORAGE MEDIUM", which is incorporated herein by reference in its entirety.

### TECHNICAL FIELD

This application relates to the field of wireless communication technologies, and in particular, to a data transmission method, a device, and a computer-readable storage medium.

### BACKGROUND

In a wireless communication system, a terminal device in a connected state performs measurement based on measurement configuration indicated by a network device. For example, when a measurement gap (measurement gap, MG) configured in the measurement configuration arrives, the terminal device stops data reception or transmission and immediately performs measurement.

For some data services, time for the terminal device to receive or transmit data is likely to overlap with measurement time. This means that, at specific moments, the terminal device may be required to perform measurement when receiving or transmitting data.

Based on a current processing method, when the time for the terminal device to receive or transmit data overlaps with the measurement time, the terminal device waits until the measurement time ends before performing data reception or transmission.

### SUMMARY

Embodiments of this application provide a data transmission method, a device, and a computer-readable storage medium, applied to the field of wireless communication technologies. By using a timer, a terminal device may receive or transmit data within measurement time.

According to a first aspect, an embodiment of this application provides a data transmission method. The method includes:
determining a state of a timer, where a start moment of the timer is within measurement time; and
receiving or transmitting first data in a case that the timer is in a running state.

In a possible embodiment, the method further includes:
receiving first information from a network device, where the first information includes configuration information of the timer; and the configuration information includes the start moment of the timer or duration information of the timer.

In a possible embodiment, the first information includes indication information, and the indication information is used to indicate that a state of the timer at the start moment is a running state or a non-running state.

In a possible embodiment, the first information includes first indication information, the first indication information is used to indicate a first moment when the timer starts running, or is used to indicate offset duration of the first moment relative to a start moment of the measurement time, or is used to indicate offset duration of the first moment relative to the start moment of the timer.

In a possible embodiment, the method further includes:
starting the timer in a case that transmission time of the first data overlaps with the measurement time, and the timer is in a non-running state.

In a possible embodiment, the method further includes:
sending second indication information to a network device in a case that the timer is started, where the second indication information is used to indicate that the timer has been started.

In a possible embodiment, a first moment when the timer starts running is a transmission start moment of second data; and the second data arrives before the first data.

In a possible embodiment, the method further includes:
stopping the timer in a case that it is detected that receiving or transmitting the first data is completed.

In a possible embodiment, the method further includes:
receiving third indication information from the network device, where the third indication information is used to indicate to stop the timer, or indicate that receiving or transmitting the first data is completed; and
stopping the timer.

In a possible embodiment, in a case that the timer is stopped, the method further includes:
performing a measurement operation in a case of being within the measurement time.

In a possible embodiment, the method further includes:
performing a measurement operation within the measurement time in a case that the timer is in an expired state.

In a possible embodiment, the first data includes uplink transmission data.

In a possible embodiment, the first data includes new transmission data.

In a possible embodiment, the first data includes retransmission data.

In a possible embodiment, the first data includes latency-sensitive data, and the latency-sensitive data is data whose latency duration is less than or greater than a preset latency threshold.

In a possible embodiment, the first data includes data on a first transmission object; the first transmission object may be a transmission object that is capable of performing data transmission within the measurement time; the transmission object includes any one of a transmission path, a data set, a data bearer, a data stream, and a transmission resource; the transmission path includes a logical channel or a logical channel group; and the transmission resource includes an uplink resource or a downlink resource.

In a possible embodiment, the first data includes downlink transmission data, and the determining a state of a timer includes:
determining the state of the timer in a case of being within active time of discontinuous reception.

In a possible embodiment, the receiving or transmitting first data includes:
receiving the first data within the active time.

In a possible embodiment, the determining a state of a timer includes:
determining the state of the timer in a case of being within active time corresponding to a retransmission timer of discontinuous reception.

In a possible embodiment, the first data includes extended reality (extednded reality, XR) service data.

In a possible embodiment, the measurement time includes a measurement time window of a measurement gap or a measurement time window of a synchronization signal/physical broadcast channel block measurement timing configuration.

According to a second aspect, an embodiment of this application provides a data transmission method. The method includes:
sending first information to a terminal device, where the first information includes configuration information of a timer; and the configuration information includes a start moment of the timer or duration information of the timer, and the start moment is within measurement time.

In a possible embodiment, the first information includes first indication information, and the first indication information is used to indicate a first moment when the timer starts running, or is used to indicate offset duration of the first moment relative to a start moment of the measurement time.

In a possible embodiment, the method further includes:
receiving first data from the terminal device or transmitting first data to the terminal device in a case that the timer is in a running state.

In a possible embodiment, a first moment when the timer starts running is a transmission start moment of second data; and the second data arrives before the first data.

In a possible embodiment, the first information includes indication information, and the indication information is used to indicate that a state of the timer at the start moment is a running state or a non-running state.

In a possible embodiment, the method further includes:
receiving second indication information from the terminal device, where the second indication information is used to indicate that the timer has been started.

In a possible embodiment, the method further includes:
sending third indication information to the terminal device, where the third indication information is used to indicate to stop the timer, or indicate that receiving or transmitting the first data is completed.

In a possible embodiment, the method further includes:
sending fourth indication information to the terminal device, where the fourth indication information is used to indicate to use the timer.

In a possible embodiment, the first data includes new transmission data.

In a possible embodiment, the first data includes retransmission data.

In a possible embodiment, the first data includes latency-sensitive data, and the latency-sensitive data is data whose latency duration is less than or greater than a preset latency threshold.

In a possible embodiment, the first data includes data on a first transmission object; the first transmission object may be a transmission object that is capable of performing data transmission within the measurement time; the transmission object includes any one of a transmission path, a data set, a data bearer, a data stream, and a transmission resource; the transmission path includes a logical channel or a logical channel group; and the transmission resource includes an uplink resource or a downlink resource.

In a possible embodiment, the first data includes XR service data.

In a possible embodiment, the measurement time includes a measurement time window of a measurement gap or a measurement time window of a synchronization signal/physical broadcast channel block measurement timing configuration.

According to a third aspect, an embodiment of this application provides a terminal device, including a processor and a memory. The memory is configured to store code instructions, and the processor is configured to run the code instructions to perform the method according to any one of the first aspect or the possible embodiments of the first aspect.

According to a fourth aspect, an embodiment of this application provides a network device, including a processor and a memory. The memory is configured to store code instructions, and the processor is configured to run the code instructions, to perform the method according to any one of the second aspect or the possible embodiments of the second aspect.

According to a fifth aspect, an embodiment of this application provides a computer-readable storage medium. The computer-readable storage medium stores a computer program or instructions. When the computer program or the instructions are run on a computer, the computer is enabled to perform the method according to any one of the first aspect or the possible embodiments of the first aspect.

Alternatively, when the computer program or the instructions are run on the computer, the computer is enabled to perform the method according to any one of the second aspect or the possible embodiments of the second aspect.

According to a sixth aspect, an embodiment of this application provides a computer program product including a computer program. When the computer program is run on a computer, the computer is enabled to perform the method according to any one of the first aspect or the possible embodiments of the first aspect.

Alternatively, when the computer program is run on the computer, the computer is enabled to perform the method according to any one of the second aspect or the possible embodiments of the second aspect.

According to a sixth aspect, this application provides a chip or a chip system. The chip or the chip system includes at least one processor and a communication interface. The communication interface and the at least one processor are interconnected through a line. The at least one processor is configured to run a computer program or instructions to perform the method according to any one of the first aspect or the possible embodiments of the first aspect; or the at least one processor is configured to run a computer program or instructions to perform the method according to any one of the second aspect or the possible embodiments of the second aspect. The communication interface in the chip may be an input/output interface, a pin, a circuit, or the like.

In a possible implementation, the chip or the chip system described above further includes at least one memory, and the at least one memory stores instructions. The memory may be a storage unit, for example, a register or a cache, inside the chip, or may be a storage unit (for example, a read-only memory or a random access memory) of the chip.

Embodiments of this application provide the data transmission method, the device, and the computer-readable storage medium. The method includes: The network device sends the first information to the terminal device, where the first information includes the configuration information of the timer. The terminal device determines the state of the timer, and receives or transmits the first data in a case that the timer is in the running state, where the start moment of the timer is within the measurement time. In the foregoing solution, by using the timer, the terminal device may receive or transmit data within the measurement time, thereby reducing a latency in receiving or transmitting data by the terminal device.

### BRIEF DESCRIPTION OF DRAWINGS

FIG. 1 is a schematic diagram of an architecture of a communication system according to an embodiment of this application;
FIG. 2 is a schematic diagram 1 of data transmission according to an embodiment of this application;
FIG. 3 is a schematic diagram 1 of transmitting data within measurement time according to an embodiment of this application;
FIG. 4 is a schematic diagram 2 of transmitting data within measurement time according to an embodiment of this application;
FIG. 5 is a schematic flowchart 1 of steps of a data transmission method according to an embodiment of this application;
FIG. 6 is a schematic flowchart 2 of steps of a data transmission method according to an embodiment of this application;
FIG. 7 is a schematic flowchart 3 of steps of a data transmission method according to an embodiment of this application;
FIG. 8 is a schematic flowchart 4 of steps of a data transmission method according to an embodiment of this application;
FIG. 9 is a schematic flowchart 5 of steps of a data transmission method according to an embodiment of this application;
FIG. 10 is a schematic flowchart 6 of steps of a data transmission method according to an embodiment of this application;
FIG. 11 is a schematic flowchart 7 of steps of a data transmission method according to an embodiment of this application;
FIG. 12 is a schematic diagram 2 of data transmission according to an embodiment of this application;
FIG. 13 is a schematic flowchart 8 of steps of a data transmission method according to an embodiment of this application; and
FIG. 14 is a schematic diagram of a hardware structure of an electronic device according to an embodiment of this application.

### DESCRIPTION OF EMBODIMENTS

To clearly describe technical solutions in embodiments of this application, in embodiments of this application, a word such as "example" or "for example" is used to represent an example, an illustration, or a description. Any embodiment or design solution described as "example" or "for example" in this application should not be explained as being preferred or advantageous than other embodiments or design solutions. Exactly, use of the words such as "example" or "for example" is intended to present a related concept in a specific manner.

In embodiments of this application, words such as "first" and "second" are used to distinguish between same items or similar items with basically same functions and effects. For example, first indication information and second indication information are merely used to distinguish between different indication information, but not used to limit a sequence thereof. A person skilled in the art may understand that the words such as "first" and "second" do not limit a quantity or an execution order, and the words such as "first" and "second" do not define a definite difference.

It should be noted that words such as "example" or "for example" in embodiments of this application are used to represent giving an example, an illustration, or a description. Any embodiment or design solution described as "example" or "for example" in this application should not be explained as being preferred or advantageous than other embodiments or design solutions. Exactly, use of the words such as "example" or "for example" is intended to present a related concept in a specific manner.

In embodiments of this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between associated objects. "At least one of the following items" or a similar expression thereof means any combination of these items, including a single item or any combination of a plurality of items. For example, at least one of a, b, or c may represent a, b, c, a and b, a and c, b and c, or a, b, and c, where a, b, and c may be singular or plural.

To clearly describe the technical solutions in embodiments of this application, the following briefly describes some terms and technologies used in embodiments of this application.
1. Measurement gap (measurement gaps, MG): Usually, because a terminal device has only one receiver and can only receive a signal on one frequency point at the same time, data sending and receiving and mobility measurement cannot be performed simultaneously. Therefore, an MG is a time interval specially set for measurement by a network device and a terminal device. The terminal device leaves a current frequency point to another frequency point for measurement. During this period, because the network device has set no requirement for the terminal device to perform sending and receiving, the terminal device may focus on measurement without performing data sending and receiving. Essentially, the MG is a mechanism in which data sending and receiving and mobility measurement are performed in a time-sharing manner.
2. Synchronization signal/physical broadcast channel block measurement timing configuration (SS/PBCH block measurement timing configuration, SMTC): is a window configured by a network device for a terminal device to perform measurement based on a synchronization signal/physical broadcast channel block (synchronization signal and PBCH block, SSB). The terminal device only needs to perform SSB measurement within the SMTC measurement time window, and does not need to perform SSB measurement outside the SMTC measurement time window.
3. Extended reality (extednded reality, XR) service: is a service field that integrates technologies such as virtual reality (virtual reality, VR), augmented reality (augmented reality, AR), and mixed reality (mixed reality, MR). An XR technology can provide an immersive experience, which enables a user to interact with digital content and add virtual elements based on the real world, to create a new user experience.
4. Discontinuous reception (Discontinuous Reception, DRX): is used to reduce power consumption of a terminal device. Through a DRX technology, the terminal device may turn off receiver of the terminal device during specific periods, to save power.
5. Radio resource management (radio resource management, RRM): is to provide a terminal device with high-quality service assurance under a limited bandwidth condition. The RRM performs flexible allocation and dynamic adjustment of radio (transmission) resources for the terminal device by a network device based on measurement (reporting) of the radio resources by the terminal device, to improve wireless spectrum utilization to the greatest extent, prevent network congestion, and maintain signaling load as small as possible. RRM measurement mainly measures values of reference signal received power (reference signal received power, RSRP) and reference signal received quality (reference signal receiving quality, RSRQ) of a serving cell and a neighboring cell.
6. Terminal device:

The terminal device in embodiments of this application may include a handheld device, a vehicle-mounted device, and the like that have a wireless communication function. For example, some terminal devices are: a mobile phone (mobile phone), a tablet computer, a palmtop computer, a notebook computer, a mobile internet device (mobile internet device, MID), a wearable device, a VR device, an AR device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a terminal device in a 5G network, a terminal device in a future evolved public land mobile network (public land mobile network, PLMN), and the like. This is not limited in embodiments of this application.

As an example rather than a limitation, in embodiments of this application, the terminal device may alternatively be a wearable device. The wearable device may also be referred to as a wearable smart device, and is a generic term for wearable devices such as glasses, gloves, watches, clothing, and shoes that are intelligently designed and developed from daily wears by using wearable technologies. The wearable device is a portable device that is worn directly on a body or integrated into clothing or an accessory of a user. The wearable device is not only a hardware device, but implements powerful functions through software support, data exchange, and cloud interaction. In a broad sense, the wearable smart device includes a full-featured and large-size device that can implement all or some of functions without relying on a smartphone, for example, a smartwatch or smart glasses, and a device that focuses only on a specific type of application function and needs to be used together with another device such as a smartphone, for example, various types of smart bands and smart jewelry that monitor physical signs.

In addition, in embodiments of this application, the terminal device may alternatively be a terminal device in an internet of things (internet of things, IoT) system. IoT is an important part in future development of information technologies, and a main technical feature thereof is connecting a thing to a network through a communication technology, to implement an intelligent network of human-machine interconnection and interconnection between things.

The terminal device in embodiments of this application may also be referred to as user equipment (user equipment, UE), a mobile station (mobile station, MS), a mobile terminal (mobile terminal, MT), an access terminal, a subscriber unit, a subscriber station, a mobile site, a mobile station, a remote station, a remote terminal, a mobile device, a user terminal, a terminal, a wireless communication device, a user agent, a user apparatus, or the like.

In embodiments of this application, the terminal device or each network device includes a hardware layer, an operating system layer that runs above the hardware layer, and an application layer that runs above the operating system layer. The hardware layer includes hardware such as a central processing unit (central processing unit, CPU), a memory management unit (memory management unit, MMU), and a memory (also referred to as a main memory). The operating system may be any one or more computer operating systems implementing service processing through a process (process), for example, a Linux operating system, a Unix operating system, an Android operating system, an iOS operating system, or a windows operating system. The application layer includes applications such as Browser, Contacts, word processing software, and instant messaging software.

In embodiments of this application, an apparatus used to implement a function of a terminal may be a terminal, or may be an apparatus that can support the terminal in implementing the function, for example, a chip system. The apparatus may be installed in the terminal.

### 7. Network device

The network device in embodiments of this application may refer to a public mobile communication network device, which is an interface device for a terminal device to access an internet, and is also a form of a radio base station; and refers to a radio transceiver station that transfers information with the terminal device in specific radio coverage, and includes a base station (base station, BS), also referred to as a base station device, which is an apparatus deployed in a radio access network (radio access network, RAN) to provide a wireless communication function. For example, a device that provides a base station function in a 2G network includes a base transceiver station (base transceiver station, BTS), a device that provides a base station function in a 3G network includes a NodeB (NodeB), a device that provides a base station function in a 4G network includes an evolved NodeB (evolved nodeB, eNB), a device that provides a base station function in a wireless local area network (wireless local area networks, WLAN) is an access point (access point, AP), and devices that provide base station functions in 5G NR are a gNB and a next generation evolved NodeB (ng-eNB). The gNB and the terminal device communicate with each other through an NR technology, and the ng-eNB and the terminal device communicate with each other through an evolved universal terrestrial radio access (evolved universal terrestrial radio access, E-UTRA) technology. Both the gNB and the ng-eNB can be connected to a 5G core network. The network device 103 in embodiments of this application further includes a device that provides a base station function in a future new communication system and the like.

In embodiments of this application, an apparatus used to implement a function of the network device may be the network device, or may be an apparatus that can support the network device in implementing the function, for example, a chip system. The apparatus may be installed in the network device.

To better understand the data transmission method provided in embodiments of this application, the following first describes an architecture of a communication system that may be involved in embodiments of this application.

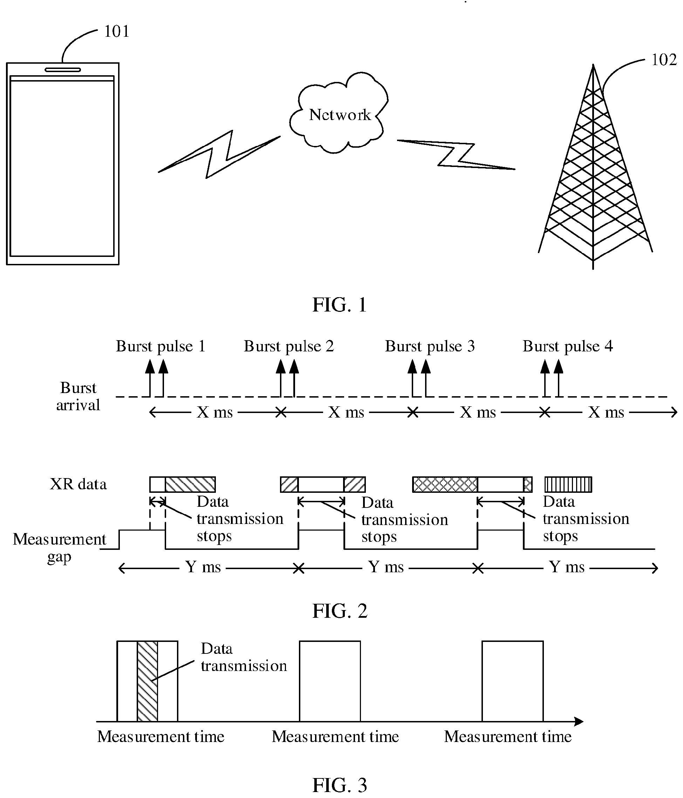

For example, refer to FIG. 1. FIG. 1 is a schematic diagram of an architecture of a communication system according to an embodiment of this application. As shown in FIG. 1, the communication system 100 includes a terminal device 101 and a network device 102, and the terminal device 101 and the network device 102 communicate with each other wirelessly through a network.

In embodiments of this application, wireless communication between the terminal device 101 and the network device 102 may also be simply referred to as "communication", and the term "communication" may also be described as "data transmission", "information transmission", or "transmission". A person skilled in the art may apply the technical solutions provided in embodiments of this application to perform wireless communication between a network device and a terminal device, for example, wireless communication between an access network device and a terminal device, and wireless communication between a core network device and a terminal device.

Before performing inter-frequency or inter-system handover, the terminal device 101 first performs inter-frequency or inter-system measurement. When a signal of a current serving cell where the terminal device 101 is located is poor, after inter-frequency or inter-system measurement is triggered, the network device 102 delivers a measurement gap (MG) configuration indication to the terminal device 101. The MG configuration indication includes a measurement cycle of the MG, and a measurement time window and measurement start time of the MG. For example, the measurement time window of the MG is 6 ms, and the measurement cycle is 40 ms or 80 ms. After receiving the MG configuration indication, the terminal device 101 starts the MG based on the MG configuration indication. Usually, because the terminal device 101 has only one receiver and can only receive a signal on one frequency point at the same time, the terminal device 101 cannot process all uplink and downlink channels within the measurement time window of the MG, in other words, the terminal device 101 does not perform data receiving or transmitting. For example, when the MG cycle is 40 ms, the terminal device 101 cannot perform data reception or transmission for a continuous 6 ms within every 40 ms.

In a wireless communication system, the terminal device in a connected state performs measurement based on measurement configuration indicated by the network device. For example, when the MG configured in the measurement configuration arrives, the terminal device stops data reception or transmission and immediately performs measurement. Because the terminal device cannot perform data transmission within the measurement time, after configuring the measurement time, the terminal device stops data reception or transmission within the measurement time, and the network device does not perform scheduling.

For some data services, time for the terminal device to receive or transmit data is likely to overlap with the measurement time. This means that, at specific moments, the terminal device may be required to perform measurement when receiving or transmitting data.

For example, because the MG cycle is an integer cycle, for some services with non-integer cycles, the network device inevitably encounters situations where the MG overlaps with such services when configuring the MG, which means that at specific moments, the terminal device may be required to perform measurement when receiving or transmitting data.

Based on to a current processing method, when data transmission time of the foregoing services overlaps with the measurement time, the terminal device waits until the measurement ends before performing data reception or transmission. This increases a latency of the terminal device in receiving or transmitting data.

For example, an XR service is used as an example. The XR service needs to process a large amount of real-time data, including video, audio, and sensor data, and the like, and these data usually need to be transmitted and processed with a low latency to meet a user demand for an immersive experience. Based on this reason, the data in the XR service is sensitive to a transmission latency requirement. Therefore, in some implementations, the data in XR services generally adopts a burst (burst) transmission mechanism.

The burst transmission mechanism is an efficient data transmission method that may transmit a large amount of data within short time. In the XR service, the burst transmission mechanism may quickly transmit video, audio, and sensor data from the network device to the terminal device, and may also transmit user interaction data from the terminal device to the network device.

Because the XR service needs to process a large amount of real-time data, and these data usually need to be transmitted and processed with a low latency. To meet this demand, a cycle of the XR service is generally a non-integer cycle. This can better adapt to different application scenarios and user demands.

Specifically, the cycle of the XR service depends on data transmission and processing speed. Because a data volume is large, the cycle of the XR service is usually long, to achieve a better processing effect. In addition, to meet a low-latency demand, the cycle of the XR service also needs to be as short as possible. Therefore, the cycle of the XR service is usually a non-integer cycle, to balance the data transmission and processing speed, as well as the low-latency demand.

Refer to FIG. 2. FIG. 2 is a schematic diagram 1 of data transmission according to an embodiment of this application.

As shown in FIG. 2, data in an XR service adopts a burst transmission mechanism. It is assumed that a cycle of the XR service to be transmitted is X milliseconds (ms), in other words, a burst pulse is generated every X milliseconds, separately including a burst pulse 1, a burst pulse 2, ..., and burst pulse 4, and there is data to be received or transmitted when each burst pulse arrives.

In some implementations, it is assumed that a cycle of an MG is Y milliseconds (ms). Because Y is usually an integer, when X is a non-integer (such as 16.67), data transmission time of the XR service inevitably overlaps with the measurement time. For example, as shown in FIG. 2, when the burst pulse 1 arrives, the data transmission time of the XR service overlaps with a later time period of one piece of measurement time; when the burst pulse 2 or the burst pulse 3 arrives, the data transmission time of the XR service overlaps with one piece of measurement time; and when the burst pulse 4 arrives, the data transmission time of the XR service does not overlap with the measurement time.

Based on a current protocol, when the data transmission time overlaps with the measurement time, a terminal device stops data reception or transmission, prioritizes measurement, and then continues to perform data reception or transmission after waiting for the measurement time to end. For example, as shown in FIG. 2, when the burst pulse 1 arrives, the terminal device still performs measurement, and then starts to perform data reception or transmission after the measurement time ends; when the burst pulse 2 or the burst pulse 3 arrives, the terminal device stops data reception or transmission and prioritizes measurement, and then the terminal device continues to perform data reception or transmission after waiting for the measurement time to end; or when the burst pulse 4 arrives, the terminal device may directly perform data reception or transmission.

It may be understood that the data transmission manner shown in FIG. 2 increases a latency of XR service data transmission, thereby reducing a capacity of a service to be transmitted. To this end, it was agreed in the XR work item of the Rel-19 to enhance an MG and scheduling restrictions, leading to the following meeting conclusions:
Measurement gap/scheduling restriction scope: For scheduling restrictions regarding inter-frequency RRM measurement between a frequency range 1 (frequency range, FR 1) and a FR 2 with measurement gaps, as well as intra-FR 2 frequency measurement without a measurement gap, specify enhancements to reduce the impact on a capacity and the impact on an individual terminal device.

In summary, how to reasonably apply measurement time to improve a capacity of a non-integer cycle service is a problem that urgently needs to be resolved. To this end, embodiments of this application propose a data transmission method, through which a terminal device may implement receiving or transmitting data within measurement time by using a timer, thereby improving a capacity of a non-integer cycle service.

Refer to FIG. 3. FIG. 3 is a schematic diagram 1 of transmitting data within measurement time according to an embodiment of this application. In some implementations, a network device may allow a terminal device to transmit data in a time period within one piece of measurement time.

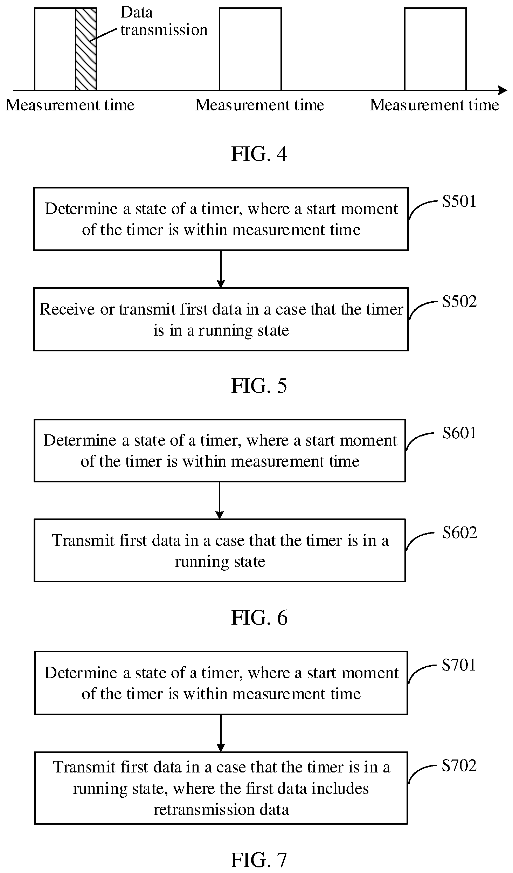

Refer to FIG. 4. FIG. 4 is a schematic diagram 2 of transmitting data within measurement time according to an embodiment of this application. In some implementations, a network device may allow ta terminal device to transmit data in a later time period within one piece of measurement time.

Optionally, in some implementations, the network device may also allow the terminal device to transmit data in an earlier time period within one piece of measurement time. Embodiments of this application do not limit a position for transmitting data within the measurement time.

The technical solution of this application is described in detail with reference to specific embodiments below. It should be noted that the following embodiments may exist independently or be combined with each other, and the same or similar content is not be repeatedly described in different embodiments.

Refer to FIG. 5. FIG. 5 is a schematic flowchart 1 of steps of a data transmission method according to an embodiment of this application. In some embodiments of this application, the data transmission method includes:
S501: Determine a state of a timer, where a start moment of the timer is within measurement time.

In some embodiments of this application, in a case that there is first data that needs to be uplink transmitted or downlink transmitted on a resource, a terminal device may first determine whether the transmission overlaps with measurement time.

In some implementations, the measurement time includes a measurement time window of a measurement gap or an SMTC measurement time window, and the terminal device may pre-determine the measurement time, including measurement start time and measurement end time. Optionally, the terminal device may obtain the measurement time through interaction with a network device or from network configuration.

In some implementations, when there is first data that needs to be uplink transmitted or downlink transmitted on a resource, the terminal device may pre-determine transmission time of the transmission, optionally including transmission start time and/or transmission end time. Optionally, the terminal device may determine the transmission time through scheduling information of the resource.

In some implementations, the terminal device compares the transmission time with the measurement time. If the transmission time overlaps with the measurement time, it may be considered that the transmission overlaps with the measurement time; or if the transmission time does not overlap with the measurement time, it may be determined that the transmission does not overlaps with the measurement time.

Optionally, the first data may include XR service data, and a type of the first data is not limited in this embodiment.

In some implementations, when the transmission overlaps with the measurement time, the state of the timer is determined. Optionally, the state of the timer includes a running state, a non-running state, a stopped state, and an expired state. The non-running state means that the timer is not running.

In some implementations, the network device may pre-configure the timer based on the measurement time, including configuring the start moment of the timer within the measurement time.

In addition, the network device may also configure an end moment or duration information of the timer. The end time of the timer may be within the measurement time or outside the measurement time. This is not limited in embodiments of this application.

In some implementations, the network device may send indication information to the terminal device, to indicate the start moment of the timer within the measurement time or the duration information of the timer to the terminal device.

S502: Receive or transmit the first data in a case that the timer is in a running state.

In some embodiments of this application, when the timer is in the running state, the terminal device may receive the first data from the network device, or transmit the first data to the network device.

In some implementations, the terminal device does not need to perform a measurement operation in a case that the timer is in the running state.

In some embodiments of this application, in a case that there is first data that needs to be uplink transmitted or downlink transmitted on a resource, if the transmission overlaps with the measurement time, and the timer is in an expired state within the measurement time, the terminal device needs to perform a measurement operation, and after the measurement operation is completed, receive or transmit the first data.

Optionally, the measurement operation includes RRM measurement.

Optionally, timing duration of the timer may be less than measurement duration of the measurement time, so that only a part of the measurement time may be used for receiving or transmitting the first data, and the remaining part of the time may still be used for performing a measurement operation.

Optionally, the first data may be uplink data, and the uplink data includes data in a physical uplink control channel (physical uplink control channel, PUCCH) or a physical uplink shared channel (physical uplink shared channel, PUSCH); or the first data may alternatively be downlink data, and the downlink data includes data in a physical downlink control channel (physical downlink control channel, PDCCH) or a physical downlink shared channel (physical downlink shared channel, PDSCH), for example, uplink control information (uplink control information, UCI) of the PUCCH or downlink control information (downlink control information, DCI) of the PDCCH.

Optionally, the first data may include XR service data, and a type of the first data is not limited in this embodiment.

According to the data transmission method provided by embodiments of this application, when there is the first data needs to be uplink transmitted or downlink transmitted on the resource, if the transmission overlaps with the measurement time, and the timer is in the running state within the measurement time, the terminal device may receive or transmit the first data during running of the timer, thereby implementing timely reception or transmission of the first data without waiting for the measurement time to end.

Optionally, the timer may use a measurement gap as granularity, or use a cycle of a measurement gap as granularity, in other words, the timer may only be started once within the measurement gap or within the cycle where the measurement gap is located, and cannot be restarted or started again once started.

In an optional embodiment of this application, the timer may be indicated to be started by the network device.

In some implementations, the network device may send first indication information to the terminal device, and the first indication information is used to indicate a first moment when the timer starts running. After receiving the first indication information, the terminal device may start the timer at the first moment.

Optionally, the first moment may be the start moment of the timer, or may be any moment between the start moment and the end moment of the timer.

In some implementations, the network device may send first indication information to the terminal device, and the first indication information is used to indicate offset duration of a first moment when the timer starts running relative to the start moment of the measurement time. After receiving the first indication information, the terminal device may start the timer after delaying the offset duration from the start moment of the measurement time.

In some implementations, the network device may send first indication information to the terminal device, and the first indication information is used to indicate offset duration of a first moment when the timer starts running relative to the start moment of the timer. After receiving the first indication information, the terminal device may start the timer after delaying the offset duration from the start moment of the timer.

In some implementations, the network device may send first indication information to the terminal device, and the first indication information is used to indicate that a first moment when the timer starts running is a transmission start moment of second data. Optionally, the second data arrives before the first data. Transmission of the second data overlaps with the measurement time, or transmission of the second data is within the measurement time.

In some implementations, in a case of indicating, to the terminal device, the start moment of the timer within the measurement time, the network device may further send indication information to the terminal device, to indicate that a state of the timer at the start moment is a running state or a non-running state.

In an optional embodiment of this application, the timer may be actively started by the terminal device.

In some implementations, in a case that there is first data needs to be uplink transmitted or downlink transmitted on a resource, and if the transmission overlaps with the measurement time, the timer is in a non-running state within the measurement time, and the non-running state means the timer is not running, the terminal device starts the timer, and receives or transmits the first data during running of the timer.

In some implementations, before the terminal device receives or transmits the first data, if there is second data that needs to be uplink transmitted or downlink transmitted on a resource, the terminal device may also actively start the timer. In this case, the start moment when the timer starts running is the transmission start moment of the second data.

In some implementations, when data is received or transmitted for the first time within the measurement time or the cycle in which the measurement time is located, that is, when a 1st piece of data is received or transmitted within the measurement time or the cycle in which the measurement time is located, which may be a 1st piece of transmission or first-time transmission overlapping with the measurement time, if the data needs to be uplink transmitted or downlink transmitted on a resource, and the transmission overlaps with the measurement time, the timer is started.

In some implementations, the terminal device, in a case of actively starting the timer, sends second indication information to the network device, and the second indication information is used to indicate that the timer has been started, and is used to indicate that the network device performs data transmission within duration of the timer. Thus, the network device may perform data scheduling during running of the timer, to receive the first data from the terminal device. The second indication information may indicate a transmission moment or transmission resource information, for the network device to determine the moment when the timer starts running, and after the network device determines that the timer starts running, downlink data transmission may be performed during running of the timer.

According to the data transmission method provided by embodiments of this application, in the case that there is the first data needs to be uplink transmitted or downlink transmitted on the resource, if the transmission overlaps with the measurement time, by utilizing the timer, the terminal device is enabled to receive or transmit the first data within the measurement time, thereby implementing timely reception or transmission of the first data without waiting for the measurement time to end.

In an optional embodiment of this application, the network device may indicate the timer to stop during running of the timer.

In some implementations, when detecting that receiving or transmitting the first data is completed, the network device may send third indication information to the terminal device, indicating to stop the timer, or indicating that receiving or transmitting the first data is completed. When the terminal device receives the third indication information from the network device, the timer is stopped.

In an optional embodiment of this application, the terminal device may actively stop the timer during running of the timer.

In some implementations, when detecting that receiving or transmitting the first data is completed, the terminal device may actively stop the timer. For example, when the terminal device receives downlink data, if the reception is correct and acknowledgment information is fed back, the timer may be stopped.

In an optional embodiment of this application, in a case that the terminal device stops the timer and is within the measurement time, the terminal device may perform a measurement operation.

In some implementations, the network device may send fourth indication information to the terminal device, and the fourth indication information is used to indicate to use the timer.

For example, in some implementations, although the network device sends configuration information of the timer to the terminal device, the terminal device does not use the timer immediately. If the terminal device subsequently receives the fourth indication information from the network device, the configuration information of the timer may be activated to transmit the first data in a case that the transmission time overlaps with the measurement time.

According to the data transmission method provided by embodiments of this application, when there is the first data needs to be uplink transmitted or downlink transmitted on the resource, if the transmission overlaps with the measurement time, and the timer is in the running state within the measurement time, the terminal device may receive or transmit the first data during running of the timer, thereby implementing timely reception or transmission of the first data without waiting for the measurement time to end. In addition, if receiving or transmitting the first data is completed and is still within the measurement time, a measurement operation may be continued by stopping the timer.

In some embodiments of this application, the first data is uplink data. Refer to FIG. 6. FIG. 6 is a schematic flowchart 2 of steps of a data transmission method according to an embodiment of this application. In some embodiments of this application, the data transmission method includes:
S601: Determine a state of a timer, where a start moment of the timer is within measurement time.
S602: Transmit first data in a case that the timer is in a running state.

In some embodiments of this application, when a terminal device obtains that the first data needs to be uplink-transmitted on a resource, if the transmission overlaps with the measurement time and the timer is in a non-running state within the measurement time, the terminal device starts the timer and transmits the first data to a network device during running of the timer.

In some embodiments of this application, when a terminal device obtains that the first data needs to be uplink-transmitted on a resource, if the transmission overlaps with the measurement time and the timer is in a running state within the measurement time, the terminal device may transmit the first data to a network device during running of the timer.

In some embodiments of this application, when a terminal device obtains that the first data needs to be uplink transmitted on a resource, if the transmission overlaps with the measurement time and the timer is in an expired state within the measurement time, the terminal device does not transmit the first data within the measurement time.

In some implementations, when the timer is in the expired state, if the terminal device is still within the measurement time, a measurement operation may be performed.

The data transmission method provided by embodiments of this application, when the terminal device obtains that the first data needs to be uplink transmitted on the resource, if the transmission overlaps with the measurement time and the timer is in the running state, the first data may be transmitted to the network device during running of the timer, thereby implementing timely transmission of the first data without waiting for the measurement time to end.

In some implementations, the first data may include data on a first transmission object; and the first transmission object is a transmission object that may perform data transmission within the measurement time.

Optionally, the transmission object includes any one of a transmission path, a data set, a data bearer, a data stream, and a transmission resource.

In some implementations, the transmission path may be a series of media used for transmitting data in a network. Optionally, the transmission path may include a logical channel (logical channel, LCH) or a logical channel group. The logical channel is a channel formed by different types of information transmitted on a physical channel. A media access control (medium access control, MAC) layer provides a data transfer service on the logical channel. The logical channel group combines a plurality of logical channels to form a logical communication path. In some communication protocols, efficiency and reliability of communication may be improved through the logical channel group.

In some implementations, the transmission resource may include an uplink resource or a downlink resource; or the transmission resource may include a time domain resource and/or a frequency domain resource.

In some implementations, the terminal device may receive second information from the network device, where the second information is used to indicate a transmission object that may perform data transmission within the measurement time.

Optionally, in some implementations, the second information includes a bitmap. Each bit in the bitmap is mapped to a different transmission object, and when a value on a bit has a first value, it indicates that a corresponding transmission object may perform data transmission within the measurement time; or when a value on a bit has a second value, it indicates that a corresponding transmission object cannot perform data transmission within the measurement time.

Optionally, in some implementations, the second information includes an identifier of a transmission object that may perform data transmission within the measurement time. For example, if the second information includes an identifier of the first transmission object, the second information may indicate that the first transmission object is a transmission object that may perform data transmission within the measurement time.

Optionally, in some implementations, the second information is carried in configuration information of a transmission object. For example, the second information may be a field in the configuration information of the transmission object. When the field is a first preset value, it indicates that the transmission object may perform data transmission within the measurement time; or when the field is a second preset value or is null, it indicates that the transmission object cannot perform data transmission within the measurement time.

In some embodiments, the first data includes retransmission data. Refer to FIG. 7. FIG. 7 is a schematic flowchart 3 of steps of a data transmission method according to an embodiment of this application. In some embodiments of this application, the data transmission method includes:
S701: Determine a state of a timer, where a start moment of the timer is within measurement time.
S702: Transmit first data in a case that the timer is in a running state, where the first data includes retransmission data.

In some implementations, if a new data indicator (new data indicator, NDI) is not toggled or switched, it may be determined that the first data includes retransmission data. For example, when the NDI remains 1 or 0, it indicates that a state of data transmission does not change. In this case, the first data may include retransmission data.

Optionally, the first data being retransmission data means that the first data can be transmitted in a case that the timer is running only if the first data is retransmission data.

In some embodiments of this application, when a terminal device obtains that the first data needs to be uplink transmitted on a resource, if the transmission overlaps with the measurement time, the transmission is retransmission, and the timer is in a non-running state within the measurement time, the terminal device starts the timer and transmits the first data to a network device during running of the timer.

In some embodiments of this application, when a terminal device obtains that the first data needs to be uplink transmitted on a resource, if the transmission overlaps with the measurement time, the transmission is retransmission, and the timer is in a running state within the measurement time, the terminal device may transmit the first data to a network device during running of the timer.

In some embodiments of this application, when a terminal device obtains that the first data needs to be uplink transmitted on a resource, if the transmission overlaps with the measurement time, the transmission is retransmission, and the timer is in an expired state within the measurement time, the terminal device does not transmit the first data within the measurement time.

In some implementations, when the timer is in the expired state, if the terminal device is still within the measurement time, a measurement operation may be performed.

The data transmission method provided by embodiments of this application, when the terminal device obtains that the first data needs to be uplink transmitted on the resource, if the transmission overlaps with the measurement time, the transmission is the retransmission, and the timer is in the running state, the first data may be transmitted to the network device during running of the timer, thereby implementing timely transmission of the first data without waiting for the measurement time to end.

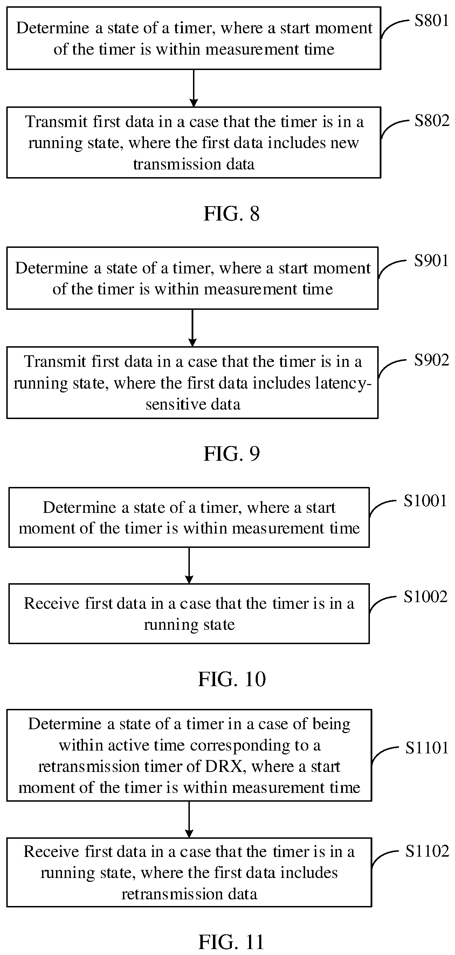

In some embodiments, the first data includes new transmission data. Refer to FIG. 8. FIG. 8 is a schematic flowchart 4 of steps of a data transmission method according to an embodiment of this application. In some embodiments of this application, the data transmission method includes:
S801: Determine a state of a timer, where a start moment of the timer is within measurement time.
S802: Transmit first data in a case that the timer is in a running state, where the first data includes new transmission data.

In some implementations, if the NDI is toggled or switched, it may be determined that the first data includes new transmission data. For example, when the NDI changes from 0 to 1, or the NDI changes from 1 to 0, it indicates that there is new transmission data.

In some embodiments of this application, when a terminal device obtains that the first data needs to be uplink transmitted on a resource, if the transmission overlaps with the measurement time, the transmission is new transmission, and the timer is in a non-running state within the measurement time, the terminal device starts the timer and transmits the first data to a network device during running of the timer.

In some embodiments of this application, when a terminal device obtains that the first data needs to be uplink transmitted on a resource, if the transmission overlaps with the measurement time, the transmission is new transmission, and the timer is in a running state within the measurement time, the terminal device may transmit the first data to a network device during running of the timer.

In some embodiments of this application, when a terminal device obtains that the first data needs to be uplink transmitted on a resource, if the transmission overlaps with the measurement time, the transmission is new transmission, and the timer is in an expired state within the measurement time, the terminal device does not transmit the first data within the measurement time.

In some implementations, when the timer is in the expired state, if the terminal device is still within the measurement time, a measurement operation may be performed.

The data transmission method provided by embodiments of this application, when the terminal device obtains that the first data needs to be uplink transmitted on the resource, if the transmission overlaps with the measurement time, the transmission is the new transmission, and the timer is in the running state, the first data may be transmitted to the network device during running of the timer, thereby implementing timely transmission of the first data without waiting for the measurement time to end.

In some embodiments, the first data includes latency-sensitive data. Refer to FIG. 9. FIG. 9 is a schematic flowchart 5 of steps of a data transmission method according to an embodiment of this application. In some embodiments of this application, the data transmission method includes:
S901: Determine a state of a timer, where a start moment of the timer is within measurement time.
S902: Transmit first data in a case that the timer is in a running state, where the first data includes latency-sensitive data.

In some implementations, the latency-sensitive data is data whose latency duration is less than or greater than a preset latency threshold.

Optionally, when the latency duration is remaining duration of data, in a case that the remaining duration is less than the preset latency threshold, the data is latency-sensitive data; or when the latency duration is buffering duration of the data, in a case that the buffering duration is greater than the preset latency threshold, the data is latency-sensitive data.

In some implementations, if the first data includes sub-data 1, sub-data 2, and sub-data 3, the latency duration of the first data may be latency duration corresponding to data with longest (largest) or shortest (smallest) latency duration in the sub-data 1, the sub-data 2, and the sub-data 3.

For example, if the first data includes the sub-data 1, the sub-data 2, and the sub-data 3, and latency duration of the sub-data 1, the sub-data 2, and the sub-data 3 are separately 1 ms, 2 ms, and 3 ms, the latency duration of the first data may be 1 ms or 3 ms.

In some implementations, whether the first data is latency-sensitive data may be determined by whether the first data includes latency-sensitive sub-data. When the first data includes latency-sensitive sub-data, the first data is latency-sensitive data; or when the first data does not include latency-sensitive sub-data, the first data is not latency-sensitive data.

For example, when a radio link control (RLC) layer determines that remaining duration of the sub-data 1 is less than the preset latency threshold, the sub-data 1 may be latency-sensitive data. In this case, if data 1 at a medium access control (MAC) layer includes the sub-data 1 and the sub-data 2 at the RLC layer, it may be determined that the data 1 at the MAC layer is latency-sensitive data; or if the data 1 at the MAC layer includes the sub-data 2 and the sub-data 3 at the RLC layer, it may be determined that the data 1 at the MAC layer does not belong to latency-sensitive data.

For another example, when the RLC layer determines that buffering duration of the sub-data 1 is greater than the preset latency threshold, the sub-data 1 may be latency-sensitive data. In this case, if the data 1 at the MAC layer includes the sub-data 1 and the sub-data 2 at the RLC layer, it may be determined that the data 1 at the MAC layer is latency-sensitive data; or if the data 1 at the MAC layer includes the sub-data 2 and the sub-data 3 at the RLC layer, it may be determined that the data 1 at the MAC layer does not belong to latency-sensitive data.

In some embodiments of this application, when a terminal device obtains that the first data needs to be uplink transmitted on a resource, if the transmission (which may be new transmission or retransmission) overlaps with the measurement time, the first data includes the latency-sensitive data, and the timer is in a non-running state within the measurement time, the terminal device starts the timer and transmits the first data to a network device during running of the timer.

In some embodiments of this application, when a terminal device obtains that the first data needs to be uplink transmitted on a resource, if the transmission (which may be new transmission or retransmission) overlaps with the measurement time, the first data includes the latency-sensitive data, and the timer is in a running state within the measurement time, the terminal device may transmit the first data to a network device during running of the timer.

In some embodiments of this application, when a terminal device obtains that the first data needs to be uplink transmitted on a resource, if the transmission (which may be new transmission or retransmission) overlaps with the measurement time, the first data includes the latency-sensitive data, and the timer is in an expired state within the measurement time, the terminal device does not transmit the first data within the measurement time.

In some implementations, when the timer is in the expired state, if the terminal device is still within the measurement time, a measurement operation may be performed.

The data transmission method provided by embodiments of this application, when the terminal device obtains that the first data needs to be uplink transmitted on the resource, if the transmission overlaps with the measurement time, the first data includes the latency-sensitive data, and the timer is in the running state, the first data may be transmitted to the network device during running of the timer, thereby implementing timely transmission of the first data without waiting for the measurement time to end.

In some embodiments of this application, the first data is downlink data. Refer to FIG. 10. FIG. 10 is a schematic flowchart 6 of steps of a data transmission method according to an embodiment of this application. In some embodiments of this application, the data transmission method includes:
S1001: Determine a state of a timer, where a start moment of the timer is within measurement time.
S1002: Receive first data in a case the timer is in a running state.

In some implementations, a terminal device may determine the state of the timer when the terminal device is within DRX active time and the active time overlaps with the measurement time.

In some implementations, the measurement time includes a measurement time window of a measurement gap or an SMTC measurement time window, and the terminal device may pre-determine the measurement time, including measurement start time and measurement end time.

In some implementations, a network device may know a start moment of the DRX active time and the measurement time. Based on the start moment of the DRX active time, the network device may determine whether the DRX active time overlaps with the measurement time, and determine whether to perform scheduling within the measurement time based on the determining result.

In some implementations, if the DRX active time overlaps with the measurement time in a case that the terminal device is within the DRX active time, the terminal device may send indication information to the network device, to indicate that the DRX active time overlaps with the measurement time; and after receiving the indication information, the network device may perform scheduling within the measurement time.

In some implementations, when the terminal device needs to receive the first data on a resource in a case that the terminal device is within the DRX active time, if the transmission overlaps with the measurement time, and the timer is in a non-running state within the measurement time, the terminal device starts the timer and receives the first data transmitted by the network device within the DRX active time.

In some implementations, when the terminal device needs to receive the first data on a resource in a case that the terminal device is in the DRX active time, if the transmission overlaps with measurement time, and the timer is in a running state within the measurement time, the terminal device may receive the first data transmitted by the network device within the DRX active time.

In some implementations, when the terminal device needs to receive the first data on a resource in a case that the terminal device is in the DRX active time, if the transmission overlaps with the measurement time, and the timer is in an expired state within the measurement time, the terminal device does not receive the first data within the DRX active time.

In some implementations, when the timer is in an expired state, if the terminal device is still within the measurement time, a measurement operation may be performed.

The data transmission method provided by embodiments of this application, when the terminal device needs to receive the first data on the resource, if the terminal device is within the DRX active time, and the active time overlaps with the measurement time, the terminal device may receive the first data transmitted by the network device within the DRX active time during running of the timer, thereby implementing timely reception of the first data without waiting for the measurement time to end.

In some embodiments of this application, the first data includes retransmission data. Refer to FIG. 11. FIG. 11 is a schematic flowchart 7 of a data transmission method according to an embodiment of this application. In some embodiments of this application, the data transmission method includes:
S1101: Determine a state of a timer in a case of being within active time corresponding to a retransmission timer of DRX, where a start moment of the timer is within measurement time.
S1102: Receive first data in a case that the timer is in a running state, where the first data includes retransmission data.

In some implementations, the terminal device may determine the state of the timer when the terminal device is within the active time corresponding to the retransmission timer of DRX and the active time overlaps with the measurement time.

In some implementations, if the timer is in a non-running state within the measurement time, the terminal device starts the timer and receives the first data transmitted by a network device within DRX active time.

In some implementations, if the timer is in a running state within the measurement time, the terminal device may receive the first data transmitted by a network device within DRX active time.

In some implementations, if the timer is in an expired state within the measurement time, the terminal device does not receive the first data within DRX active time.

The data transmission method provided in embodiments of this application, when there is the first data to be downlink transmitted on a resource, if the terminal device is within the active time corresponding to the retransmission timer of DRX, and the active time overlaps with the measurement time, the terminal device may receive the first data transmitted by the network device within the DRX active time during running of the timer, thereby implementing timely reception of the first data without waiting for the measurement time to end.

In some embodiments of this application, in a case that the timer is in a running state and receiving of the first data is completed (such as returning an ACK), the timer may be stopped.

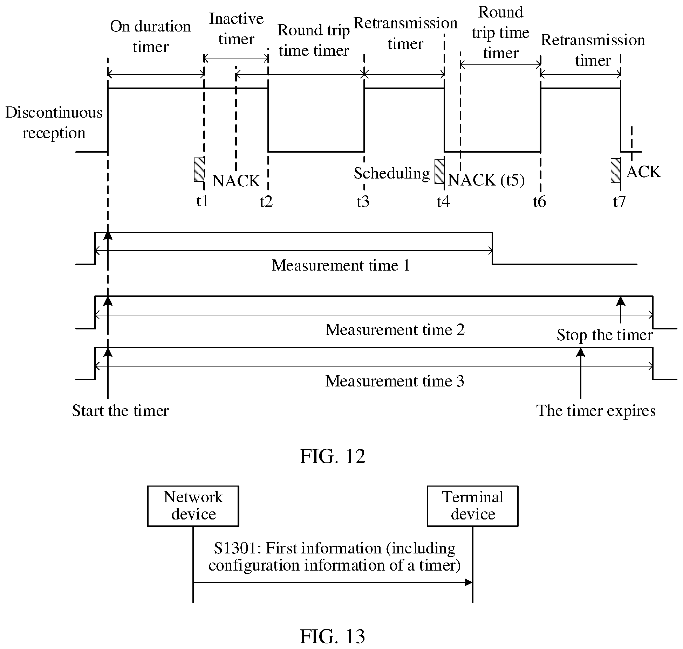

With reference to FIG. 12. FIG. 12 is a schematic diagram 2 of data transmission according to an embodiment of this application.

The following describes some parameters involved in FIG. 12:
On duration timer (on duration timer): From a start position of one DRX cycle, during running of the timer, a terminal device needs to continuously monitor duration of a physical downlink control channel (Physical Downlink Control Channel, PDCCH) of a network.

Inactive timer (inactive timer): The timer starts after a terminal device receives new data scheduling PDCCH signaling, which indicates a quantity of consecutive PDCCH subframes, while remaining in an active state, that the terminal device still needs to continue monitoring after successfully decoding downlink control information (downlink control information, DCI) of a PDCCH channel.

Round trip time timer (round trip time, RTT Timer): This is also referred to as a hybrid automatic repeat request round trip time timer (HARQ RTT Timer), and a length of the timer is a minimum time interval from a moment of a hybrid automatic repeat request (hybrid automatic repeat request, HARQ) feedback to reception of HARQ retransmission for that process. In some implementations, when data corresponding to a downlink process is not successfully decoded, the terminal device starts the timer at a 1^{st} symbol after a negative acknowledgment (negative acknowledgment, NACK) feedback of the process. Retransmission scheduling of the downlink process is scheduled only after the timer.

Retransmission timer (retransmission timer): The timer starts at a 1^{st} symbol after an RTT Timer expires. During running of the timer, a terminal device monitors a control channel of a network, and if downlink scheduling information or downlink configuration authorization for the process is received, the timer is stopped.

DRX is divided into DRX in an idle state and DRX in a connected state. In some implementations, as shown in FIG. 12, the DRX process in a connected state includes:
1. From the start position of the DRX cycle, the on duration timer starts, and the terminal device starts to monitor the control channel.
2. During running of the on duration timer, the network device sends scheduling signaling for initial transmission of a downlink process 1 at a moment t1, thereby starting the inactive timer.
3. When the terminal device fails to successfully decode downlink data of the downlink process 1, a NACK is fed back, and the round trip time timer is started at a 1^{st} symbol after the NACK feedback.
4. At a moment t2, the inactive timer expires, and the terminal device stops monitoring the control channel.
5. At a moment t3, the round trip time timer expires, the retransmission timer is started, and the terminal device starts to monitor the control channel.
6. At a moment t4, the terminal device receives a 1^{st} retransmission scheduling instruction for the downlink process 1 sent by the network device, the retransmission timer stops, and the terminal device stops monitoring the control channel.
7. If the terminal device still fails to decode first retransmission data, a NACK is fed back at a moment t5, and the round trip time timer is started at the 1^{st} symbol after the NACK feedback.
8. At a moment t6, the round trip time timer expires, the retransmission timer is started, and the terminal device starts to monitor the control channel.
9. At a moment t7, the terminal device receives a 2^{nd} retransmission scheduling instruction for downlink process 1 sent by the network device, the retransmission timer stops, and the user terminal stops monitoring the control channel.
10. If the terminal device successfully decodes second retransmission data, an acknowledge (ACK) is fed back, and the round trip time timer is no longer started.

Refer to FIG. 12. In some implementations, when measurement time configured by the terminal device is measurement time 1, if a timer is started when the on duration timer is started, the terminal device may receive data during running of the timer. When the measurement time ends, if the timer is still running, the timer may be stopped in this case, or the timer is not actively stopped and the timer expires.

In some implementations, when measurement time configured by the terminal device is measurement time 2, if a timer is started when the on duration timer is started, the terminal device may receive data during running of the timer. After an ACK is fed back, if the timer does not expire, because it is still within the measurement time 2, the timer may be stopped, and a measurement operation may continue to be performed.

In some implementations, when measurement time configured by the terminal device is measurement time 3, if a timer is started when the on duration timer is started, the terminal device may receive data during running of the timer. After data transmission is performed in a time period, the timer expires. Because it is still within the measurement time 3, a measurement operation needs to be performed, and data transmission cannot be performed.

In addition, it can be seen from FIG. 12 that, in some implementations, if the timer does not expire, the timer can only be stopped when transmission of a downlink service is completed. During running of the timer and in a case that the round trip time timer is running, although data transmission is not performed, data transmission is required later, so the timer cannot be stopped.

The data transmission method provided by embodiments of this application, when there is first data that needs to be downlink transmitted on a resource, if within the active time corresponding to the retransmission timer of DRX, and the active time overlaps with the measurement time, the terminal device may receive the first data transmitted by the network device within the active time of DRX during the running of the timer, thereby implementing timely reception of the first data without waiting for the measurement time to end. In addition, when it is detected that receiving the first data is completed (for example, an ACK has been fed back), the timer is stopped, so that a measurement operation may continue to be performed.

Refer to FIG. 13. FIG. 13 is a schematic flowchart 8 of steps of a data transmission method according to an embodiment of this application. In some embodiments of this application, the data transmission method includes:
S1301: A network device sends first information to a terminal device, where the first information includes configuration information of a timer.

In some implementations, the configuration information includes a start moment of the timer or duration information of the timer, and the start moment may be within measurement time.

Optionally, the measurement time includes a measurement time window of a measurement gap or an SMTC measurement time window.

In some implementations, the network device may pre-configure the timer based on the measurement time and/or data transmission time, including configuring a start moment of the timer within the measurement time.

In addition, the network device may also configure an end moment or the duration information of the timer. The end moment of the timer may be within the measurement time or outside the measurement time. This is not limited in embodiments of this application.

Optionally, the timer may use a measurement gap as granularity, or use a cycle of a measurement gap as granularity, in other words, the timer may only be started once within the measurement gap or within a cycle where the measurement gap is located, and cannot be restarted or started again once started.

In some implementations, the first information can include first indication information, the first indication information is used to indicate a first moment when the timer starts running, or is used to indicate offset duration of the first moment when the timer starts running relative to the start moment of the measurement time, or is used to indicate offset duration of the first time relative to the start moment of the timer.

Optionally, the first moment may be the start moment of the timer, or may be any moment between the start moment and the end moment of the timer.

In some implementations, in a case that the first indication information is used to indicate the first moment when the timer starts running, the terminal device may start the timer at the first moment after receiving the first indication information.

In some implementations, in a case that the first indication information is used to indicate the offset duration of the first moment when the timer starts running relative to the start moment of the measurement time, the terminal device may start, after receiving the first indication information, the timer after delaying the offset duration from the start moment of the measurement time.

In some implementations, the first indication information may also be used to indicate the offset duration of the first moment when the timer starts running relative to the start moment of the timer. In this case, the terminal device may start, after receiving the first indication information, the timer after delaying the offset duration from the start moment of the timer.

In some implementations, the network device may send the first indication information to the terminal device, and the first indication information is used to indicate that the first moment when the timer starts running is a transmission start moment of second data. Optionally, the second data arrives before first data. Transmission of the second data overlaps with the measurement time, or the transmission of the second data is within the measurement time.

In some implementations, in a case of indicating, to the terminal device, the start moment of the timer within the measurement time, the network device may further send indication information to the terminal device, to indicate that a state of the timer at the start moment is a running state or a non-running state.

In some implementations, in a case that the timer is in a running state, the network device may receive first data from the terminal device, or transmit first data to the terminal device.

In some implementations, the first indication information may also be used to indicate an end moment or timing duration of the timer. The end moment of the timer may be within the measurement time or outside the measurement time. This is not limited in embodiments of this application.

In some implementations, if the network device receives second indication information from the terminal device, and the second indication information is used to indicate that the timer has been started, the network device may receive first data from the terminal device or transmit first data to the terminal device during running of the timer.

In some implementations, in a case that the terminal device actively starts the timer, the terminal device sends second indication information to the network device, and the second indication information is used to indicate that the timer has been started. Thus, the network device may perform data scheduling during running of the timer. Optionally, the second indication information may indicate a transmission moment or transmission resource information, and is used by the network device to determine a moment when the timer starts running. When the network device determines that the timer starts running, data may be received or transmitted during running of the timer.

In some implementations, when detecting that receiving or transmitting the first data is completed, the network device may send third indication information to the terminal device, indicating to stop the timer, or indicating that receiving or transmitting the first data is completed. When the terminal device receives the third indication information from the network device, the timer is stopped.

In some implementations, the network device may send fourth indication information to the terminal device, and the fourth indication information is used to indicate to use the timer.

For example, in some implementations, although the network device sends the configuration information of the timer to the terminal device, the terminal device does not use the timer immediately. If the terminal device subsequently receives the fourth indication information from the network device, the configuration information of the timer may be activated to transmit the first data in a case that the transmission time overlaps with the measurement time.

Optionally, in some implementations, the first data includes new transmission data.

Optionally, in some implementations, the first data includes retransmission data.

Optionally, in some implementations, the first data includes latency-sensitive data, and the latency-sensitive data is data whose latency duration is less than or greater than a preset latency threshold.

Optionally, in some implementations, the first data includes data on a first transmission object; and the first transmission object is a transmission object that is capable of performing data transmission within the measurement time. Optionally, the transmission object includes any one of a transmission path, a data set, a data bearer, a data stream, and a transmission resource; the transmission path includes a logical channel or a logical channel group; and the transmission resource includes an uplink resource or a downlink resource.

In some implementations, the network device may send second information to the terminal device, where the second information is used to indicate a transmission object that may perform data transmission within the measurement time.

Optionally, in some implementations, the second information includes a bitmap. Each bit in the bitmap is mapped to a different transmission object, and when a value on a bit has a first value, it indicates that a corresponding transmission object may perform data transmission within the measurement time; or when a value on a bit has a second value, it indicates that a corresponding transmission object cannot perform data transmission within the measurement time.

Optionally, in some implementations, the second information includes an identifier of a transmission object that may perform data transmission within the measurement time. For example, if the second information includes an identifier of the first transmission object, the second information may indicate that the first transmission object is a transmission object that may perform data transmission within the measurement time.

Optionally, in some implementations, the second information is carried in configuration information of a transmission object. For example, the second information may be a field in the configuration information of the transmission object. When the field is a first preset value, it indicates that the transmission object may perform data transmission within the measurement time; or when the field is a second preset value or is null, it indicates that the transmission object cannot perform data transmission within the measurement time.

Optionally, the first data may include XR service data.

In this embodiment, a type of the first data is not limited.

According to the data transmission method provided by embodiments of this application, the network device configures the timer, to enable the terminal device to receive or transmit the first data during running of the timer, thereby implementing, in a case that the data transmission time overlaps with the measurement time, timely reception or transmission of the first data without waiting for the measurement time to end.

The data transmission method in embodiments of this application has been described above. An apparatus for performing the foregoing data transmission method provided in embodiments of this application is described below. A person skilled in the art may understand that the method and the apparatus may be combined and mutual reference may be made, and that a related apparatus provided in an embodiment of this application may perform the steps in the foregoing data transmission method.

In some embodiments, an embodiment of this application provides a data transmission apparatus, which may be used in a terminal device, and the data transmission apparatus includes:
a determining module, configured to determine a state of a timer, where a start moment of the timer is within measurement time; and
a communication module, configured to receive or transmit the first data in a case that the timer is in a running state.

In a possible implementation, the communication module is further configured to:
receive first information from a network device, where the first information includes configuration information of the timer; and the configuration information includes a start moment of the timer or duration information of the timer.

In a possible implementation, the first information includes indication information, and the indication information is used to indicate that a state of the timer at the start moment is a running state or a non-running state.

In a possible implementation, the first information includes first indication information, the first indication information is used to indicate a first moment when the timer starts running, or is used to indicate offset duration of the first moment relative to a start moment of the measurement time, or is used to indicate offset duration of the first moment relative to the start moment of the timer.

In a possible implementation, the data transmission apparatus may further include a processing module, configured to:
start the timer in a case that transmission time of the first data overlaps with the measurement time, and the timer is in a non-running state.

In a possible implementation, the communication module is further configured to:
send second indication information to the network device in a case that the timer is started, where the second indication information is used to indicate that the timer has been started.

In a possible implementation, the first moment when the timer starts running is a transmission start moment of second data; and the second data arrives before the first data.

In a possible implementation, the processing module is further configured to:
stop the timer in a case that it is detected that receiving or transmitting the first data is completed.

In a possible implementation, the communication module is further configured to:
receive third indication information from the network device, where the third indication information is used to indicate to stop the timer, or indicate that receiving or transmitting the first data is completed; and the processing module is further configured to: stop the timer.

In a possible implementation, the data transmission apparatus may further include an execution module, configured to:
perform a measurement operation if being within the measurement time in a case that the timer is stopped.

In a possible implementation, the execution module is configured to:
perform a measurement operation within the measurement time in a case that the timer is in an expired state.

In a possible implementation, the first data includes uplink transmission data.

In a possible implementation, the first data includes new transmission data.

In a possible implementation, the first data includes retransmission data.

In a possible implementation, the first data includes latency-sensitive data, and the latency-sensitive data is data whose latency duration is less than or greater than a preset latency threshold.

In a possible implementation, the first data includes data on a first transmission object; the first transmission object is a transmission object that is capable of performing data transmission within the measurement time; the transmission object includes any one of a transmission path, a data set, a data bearer, a data stream, and a transmission resource; the transmission path includes a logical channel or a logical channel group; and the transmission resource includes an uplink resource or a downlink resource

In a possible implementation, the first data includes downlink transmission data, and the determining module is configured to:
determine the state of the timer in a case of being within active time of discontinuous reception.

In a possible implementation, the communication module is further configured to:
receive the first data within the active time.

In a possible implementation, the determining module is configured to:
determine the state of the timer in a case of being within active time corresponding to a retransmission timer of discontinuous reception.

In a possible implementation, the first data includes XR service data.

In a possible implementation, the measurement time includes a measurement time window of a measurement gap or an SMTC measurement time window.

In some embodiments, an embodiment of this application provides a data transmission apparatus, which may be used in a network device, and the data transmission apparatus includes:
a sending module, configured to send first information to a terminal device, where the first information includes configuration information of a timer; and the configuration information includes a start moment of the timer or duration information of the timer, and the start moment is within measurement time.

In a possible implementation, the first information includes first indication information, and the first indication information is used to indicate a first moment when the timer starts running, or is used to indicate offset duration of the first moment relative to a start moment of the measurement time.

In a possible implementation, the apparatus further includes a receiving module, configured to:
receive first data from the terminal device or transmitting first data to the terminal device in a case that the timer is in a running state.

In a possible implementation, the first moment when the timer starts running is a transmission start moment of second data; and the second data arrives before the first data.

In a possible implementation, the first information includes indication information, and the indication information is used to indicate that a state of the timer at the start moment is a running state or a non-running state.

In a possible implementation, the receiving module is further configured to:
receiving second indication information from the terminal device, where the second indication information is used to indicate that the timer has been started.

In a possible implementation, the sending module is further configured to:
send third indication information to the terminal device, where the third indication information is used to indicate to stop the timer, or indicate that receiving or transmitting the first data is completed.

In a possible implementation, the method further includes:
send fourth indication information to the terminal device, where the fourth indication information is used to indicate to use the timer.

In a possible implementation, the first data includes new transmission data.

In a possible implementation, the first data includes retransmission data.

In a possible implementation, the first data includes latency-sensitive data, and the latency-sensitive data is data whose latency duration is less than or greater than a preset latency threshold.

In a possible implementation, the first data includes data on a first transmission object; and the first transmission object is a transmission object that is capable of performing data transmission within the measurement time. Optionally, the transmission object includes any one of a transmission path, a data set, a data bearer, a data stream, and a transmission resource; the transmission path includes a logical channel or a logical channel group; and the transmission resource includes an uplink resource or a downlink resource.

In a possible implementation, the first data includes XR service data.

In a possible implementation, the measurement time includes a measurement time window of a measurement gap or an SMTC measurement time window.

It should be noted that all module names involved in embodiments of this application may be defined as other names, provided that functions of the modules can be implemented. The module names are not specifically limited.

The data transmission method provided in embodiments of this application may be applied to an electronic device having a communication function. The electronic device includes a terminal device or a network device. For a specific device form and the like of the terminal device or the network device, refer to the foregoing related descriptions. Details are not described herein again.

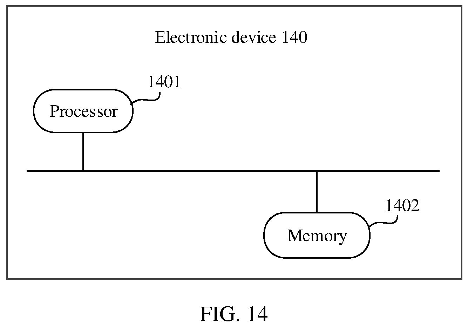

Refer to FIG. 14. FIG. 14 is a schematic diagram of a hardware structure of an electronic device according to an embodiment of this application. An embodiment of this application provides an electronic device, and the electronic device includes a processor 1401 and a memory 1402. The memory 1402 stores computer-executable instructions. The processor 1401 executes the computer-executable instructions stored in the memory 1402, to enable the electronic device to perform the foregoing data transmission method.

An embodiment of this application provides a chip. The chip includes a processor, and the processor is configured to invoke a computer program in a memory, to perform the technical solutions in the foregoing embodiments. An implementation principle and technical effects of the chip are similar to those in the foregoing related embodiments. Details are not described herein again.

An embodiment of this application further provides a computer-readable storage medium. The computer-readable storage medium stores a computer program. The foregoing data transmission method is implemented when the computer program is executed by a processor. All or some of the data transmission methods described in the foregoing embodiments may be implemented by software, hardware, firmware, or any combination thereof. If implemented by software, functions may be stored in a computer-readable medium or transmitted on a computer-readable medium as one or more instructions or code. The computer-readable medium may include a computer storage medium and a communication medium, and may further include any medium that enables a computer program to be transmitted from a place to another place. The storage medium may be any target medium accessible by a computer.

In a possible implementation, the computer-readable medium may include a RAM, a ROM, a compact disc read-only memory (compact disc read-only memory, CD-ROM) or another optical disc memory, a magnetic disk memory or another magnetic storage device, or any other medium that is to carry or store required program code in a form of instructions or a data structure, and is accessible by a computer. In addition, any connection is appropriately referred to as a computer-readable medium. For example, if software is transmitted from a website, a server, or another remote source by using a coaxial cable, an optical fiber cable, a twisted pair, a digital subscriber line (digital subscriber line, DSL), or wireless technologies (such as infrared, radio, and microwave), the coaxial cable, the optical fiber cable, the twisted pair, the DSL, or the wireless technologies such as infrared, radio, and microwave are included in the definition of the medium. As used herein, a magnetic disk and an optical disc include a compact disc, a laser disc, an optical disc, a digital versatile disc (digital versatile disc, DVD), a floppy disk, and a Blu-ray disc. The magnetic disk usually reproduces data in a magnetic manner, and the optical disc reproduces data optically by using a laser. A combination of the foregoing should also be included in the scope of the computer-readable medium.

An embodiment of this application provides a computer program product. The computer program product includes a computer program, and when the computer program is run, a computer is enabled to perform the foregoing data transmission method.

The objectives, technical solutions, and beneficial effects of the present invention are further described in detail in the foregoing specific implementations. It should be understood that the foregoing descriptions are merely specific implementations of the present invention, but are not intended to limit the protection scope of the present invention. Any modification, equivalent replacement, improvement, or the like made based on the technical solutions of the present invention shall fall within the protection scope of the present invention.

## Claims

1. A data transmission method, comprising:
determining a state of a timer, wherein a start moment of the timer is within measurement time; and
receiving or transmitting first data in a case that the timer is in a running state.

2. The method according to claim 1, wherein the method further comprises:
receiving first information from a network device, wherein the first information comprises configuration information of the timer; and the configuration information comprises the start moment of the timer or duration information of the timer.

3. The method according to claim 2, wherein
the first information comprises indication information, and the indication information is used to indicate that a state of the timer at the start moment is a running state or a non-running state.

4. The method according to claim 2, wherein
the first information comprises first indication information, the first indication information is used to indicate a first moment when the timer starts running, or is used to indicate offset duration of the first moment relative to a start moment of the measurement time, or is used to indicate offset duration of the first moment relative to the start moment of the timer.

5. The method according to claim 1, wherein the method further comprises:
starting on the timer in a case that transmission time of the first data overlaps with the measurement time, and the timer is in a non-running state.

6. The method according to claim 5, wherein the method further comprises:
sending second indication information to a network device in a case that the timer is started, wherein the second indication information is used to indicate that the timer has been started.

7. The method according to claim 1, wherein a first moment when the timer starts running is a transmission start moment of second data; and the second data arrives before the first data.

8. The method according to any one of claims 1 to 7, wherein the method further comprises:
stopping the timer in a case that it is detected that receiving or transmitting the first data is completed.

9. The method according to any one of claims 1 to 7, wherein the method further comprises:
receiving third indication information from the network device, wherein the third indication information is used to indicate to stop the timer, or indicate that receiving or transmitting the first data is completed; and
stopping the timer.

10. The method according to claim 8 or 9, wherein in a case that the timer is stopped, the method further comprises:
performing a measurement operation in a case of being within the measurement time.

11. The method according to claim 1, wherein the method further comprises:
performing a measurement operation within the measurement time in a case that the timer is in an expired state.

12. The method according to any one of claims 1 to 11, wherein the first data comprises uplink transmission data; or
the first data comprises new transmission data; or
the first data comprises retransmission data; or
the first data comprises latency-sensitive data, and the latency-sensitive data is data whose latency duration is less than or greater than a preset latency threshold; or
the first data comprises data on a first transmission object; the first transmission object may be a transmission object that is capable of performing data transmission within the measurement time; the transmission object comprises any one of a transmission path, a data set, a data bearer, a data stream, and a transmission resource; the transmission path comprises a logical channel or a logical channel group; and the transmission resource comprises an uplink resource or a downlink resource.

13. The method according to any one of claims 1 to 11, wherein the first data comprises downlink transmission data, and the determining a state of a timer comprises:
determining the state of the timer in a case of being within active time of discontinuous reception.

14. The method according to claim 13, wherein the receiving or transmitting first data comprises:
receiving the first data within the active time.

15. The method according to claim 14, wherein the first data comprises retransmission data.

16. The method according to claim 13, wherein the determining a state of a timer comprises:
determining the state of the timer in a case of being within active time corresponding to a retransmission timer of discontinuous reception.

17. The method according to any one of claims 1 to 16, wherein the first data comprises extended reality (XR) service data.

18. The method according to any one of claims 1 to 16, wherein the measurement time comprises a measurement time window of a measurement gap or a measurement time window of a synchronization signal/physical broadcast channel block measurement timing configuration.

19. A data transmission method, comprising:
sending first information to a terminal device, wherein the first information comprises configuration information of a timer; and the configuration information comprises a start moment of the timer or duration information of the timer, and the start moment is within measurement time.

20. The method according to claim 19, wherein
the first information comprises first indication information, and the first indication information is used to indicate a first moment when the timer starts running, or is used to indicate offset duration of the first moment relative to a start moment of the measurement time.

21. The method according to claim 19, wherein the method further comprises:
receiving first data from the terminal device or transmitting first data to the terminal device in a case that the timer is in a running state.

22. The method according to claim 21, wherein a first moment when the timer starts running is a transmission start moment of second data; and the second data arrives before the first data.

23. The method according to any one of claims 19 to 22, wherein
the first information comprises indication information, and the indication information is used to indicate that a state of the timer at the start moment is a running state or a non-running state.

24. The method according to claim 21, wherein the method further comprises:
receiving second indication information from the terminal device, wherein the second indication information is used to indicate that the timer has been started.

25. The method according to claim 21 or 24, wherein the method further comprises:
sending third indication information to the terminal device, wherein the third indication information is used to indicate to stop the timer, or indicate that receiving or transmitting the first data is completed.

26. The method according to any one of claims 19 to 25, wherein the method further comprises:
sending fourth indication information to the terminal device, wherein the fourth indication information is used to indicate to use the timer.

27. The method according to claim 21, wherein the first data comprises new transmission data; or
the first data comprises retransmission data; or
the first data comprises latency-sensitive data, and the latency-sensitive data is data whose latency duration is less than or greater than a preset latency threshold; or
the first data comprises data on a first transmission object; the first transmission object is a transmission object that is capable of performing data transmission within the measurement time; the transmission object comprises any one of a transmission path, a data set, a data bearer, a data stream, and a transmission resource; the transmission path comprises a logical channel or a logical channel group; and the transmission resource comprises an uplink resource or a downlink resource; or
the first data comprises XR service data.

28. The method according to any one of claims 19 to 27, wherein the measurement time comprises a measurement time window of a measurement gap or a measurement time window of a synchronization signal/physical broadcast channel block measurement timing configuration.

29. A terminal device, comprising a processor and a memory, wherein
the memory stores computer-executable instructions; and
the processor executes the computer-executable instructions stored in the memory, to enable the terminal device to perform the method according to any one of claims 1-18.

30. A network device, comprising: a processor and a memory, wherein
the memory stores computer-executable instructions; and
the processor executes the computer-executable instructions stored in the memory, to enable the network device to perform the method according to any one of claims 19-28.

31. A computer-readable storage medium, wherein the computer-readable storage medium stores a computer program, and the computer program, when executed by a processor, implements the method according to any one of claims 1-18 or the method according to any one of claims 19-28.

32. A computer program product, comprising a computer program, wherein when the computer program is run, a computer is enabled to implement the method according to any one of claims 1-18, or to implement the method according to any one of claims 19-28.
